# DEMANDE DE BREVET EUROPEEN

(11) **EP 1 155 726 A1**
(43) Date de publication de la demande: **21.11.2001**
(21) Numéro de dépôt: 01401261.1
(22) Date de dépôt: 16.05.2001
(51) Int. Cl.: B01D 47/02, B01D 53/84, B05B 7/04

(54) **Diffuseur pneumatique pour la formation de fines gouttelettes d'un liquide par collision avec un flux gazeux**

(30) Priorité: 17.05.2000 FR 0006259
(71) Demandeur: Fédération Vendée-Recherche, 85002 La Roche sur Yon (FR)
(72) Inventeur: Bourcier, Jacques, 85600 Montaigu (FR); Le Cloirec, Pierre, 44240 La Chapelle sur Erdre (FR); Humeau, Philippe, 49340 Trementines (FR)
(74) Mandataire: Le Cloirec, Claudine

(57) **Abrégé**

Diffuseur pneumatique (2) pour la formation de fines goulettes d'un liquide par collision avec un flux gazeux, comprenant une chambre (12), de préférence cylindrique, fermée, raccordée à un conduit d'arrivée de liquide (B), dans le volume intérieur de laquelle est disposé au moins un tube (11), parallèle à l'axe de la chambre (12) et percé radialement d'orifices (15) permettant au liquide contenu dans ladite chambre (12) de s'échapper en gouttelettes qui sont alors pulvérisées par le gaz (G₂) circulant à grande vitesse à l'intérieur dudit tube (11).

Le couple gaz/liquide préféré est le couple air/eau.

Le diffuseur peut être utilisé dans un dispositif de traitement d'un flux gazeux par un liquide, par exemple pour la biodégradation de polluants gazeux dans une colonne sans garnissage.

## Description

La présente invention concerne un diffuseur pneumatique pour la formation de fines gouttelettes d'un liquide par collision avec un flux gazeux, utilisable notamment, mais pas exclusivement, dans un dispositif de traitement biologique d'un gaz pollué.

Les techniques de traitement biologique des gaz consistent à éliminer, en les dégradant, les molécules polluantes. Par exemple, les composés organiques volatils (C.O.V.) et les molécules malodorantes sont des molécules organiques qui peuvent, si elles sont biodégradables, être dégradées par des micro-organismes. Les dispositifs permettant cette dégradation biologique sont de plusieurs types.

Selon un premier type, les micro-organismes peuvent être disposés sur un support appelé biofiltre auquel ils se fixent et viennent, en milieu humide, consommer les molécules organiques contenues dans le mélange gaz/liquide. C'est, par exemple, le cas dans FR 2 591 122 qui décrit un procédé consistant à faire passer le gaz à traiter contenant des polluants biodégradables à travers un support formé de couches de tourbe sur laquelle sont fixés des micro-organismes et à humidifier ladite tourbe avec des solutions aqueuses apportant des nutriments. La biomasse épuratrice utilise pour se développer sur le lit de tourbe, en tant que source de carbone et d'azote, la matière organique ou minérale présente dans la tourbe, dans les solutions aqueuses d'arrosage et dans le gaz à traiter qui traverse le biofiltre.

Selon un deuxième type, dans un dispositif appelé «percolateur», la biomasse est fixe et l'eau circule sur celle-ci. Un tel dispositif n'est utilisé que lorsque les molécules polluantes sont rapidement biodégradées, car les temps de contact entre la biomasse fixée et l'eau circulant sont très courts. Il faut généralement des réacteurs de grandes dimensions pour obtenir une épuration satisfaisante.

Selon un troisième type, dans un dispositif appelé biolaveur, le gaz chargé en molécules polluantes est préalablement "lavé" dans un premier réacteur par un liquide de lavage dans lequel sont alors transférées lesdites molécules polluantes. Pour faciliter le contact, et donc le transfert gaz/liquide, sont souvent utilisées des colonnes à garnissage dans lesquelles le liquide ruisselle sur des éléments de remplissage traversés à co-courant par le gaz à traiter, pour augmenter la surface d'échange et favoriser ainsi le transfert gaz/liquide (comme par exemple dans WO 97/29 832).

Les molécules polluantes alors contenues dans le liquide de lavage sont ensuite biodégradées dans un second réacteur.

Le principal inconvénient de ces trois types de traitement biologique de gaz pollué est le colmatage rapide du biofiltre ou de la colonne de lavage, nécessitant un lavage et/ou un remplacement fréquent.

Il a donc été envisagé, de s'affranchir du garnissage et/ou du support en mettant à réagir directement les bactéries dans le liquide de lavage, avec le gaz à traiter. Se pose alors un problème de surface de contact entre le gaz et le liquide. Pour augmenter cette surface d'échange, il a été proposé de projeter le liquide en gouttelettes directement dans le flux gazeux.

Les systèmes du type arrosage, aspersion, forment, grâce à de l'eau sous pression éventuellement sous l'action d'air comprimé à quelques bars, des gouttes de taille trop importante. Il n'est, en outre, pas possible avec un tel système de traiter de grands volumes d'air. Les systèmes de type nébulisation pneumatique à l'aide de buses présentent des orifices de diamètre voisin de 120 µm permettant certes la production de gouttelettes de liquide très fines, tel un brouillard, mais incompatibles avec l'utilisation d'un liquide renfermant des particules en suspension et/ou de micro-organismes. De tels orifices sont rapidement colmatés, ou bien il est nécessaire de prévoir une pré-filtration à un seuil très bas, de l'ordre de 10-20 µm. En outre, il faut un nombre important de buses pour réussir à traiter un grand volume d'air, ce qui n'est pas concevable pour des raisons de coût.

Un des buts de la présente invention est de proposer un dispositif de diffusion de liquide, dans un gaz permettant d'augmenter la surface de contact gaz/liquide et donc pour cela de former de très fines gouttelettes de liquide (de l'ordre de 100 µm ou moins) en suspension dans un flux de gaz important.

Un autre but de la présente invention est de proposer un dispositif de diffusion ne nécessitant pas d'orifices inférieurs au millimètre pour diffuser un liquide susceptible de renfermer des matières en suspension et/ou des micro-organismes.

Encore un autre but de l'invention est de proposer un dispositif de diffusion pouvant être utilisé dans un dispositif de traitement biologique d'un gaz pollué.

Ces buts sont atteints par le diffuseur pneumatique selon la présente invention, pour la formation de fines gouttelettes d'un liquide par collision d'un flux gazeux, le diffuseur comprenant une chambre, de préférence cylindrique, fermée, raccordée à un conduit d'arrivée de liquide, dans le volume intérieur de laquelle est disposé au moins un tube, de préférence un faisceau de tubes, parallèle(s) à l'axe de la chambre et percé(s) radialement d'au moins un orifice permettant au liquide contenu dans ladite chambre de s'échapper en gouttelettes qui sont alors pulvérisées par le gaz circulant à grande vitesse à l'intérieur desdits tubes.

Une telle structure permet d'introduire dans le diffuseur un très grand volume de gaz, ce gaz ne nécessitant pas d'être sous une pression importante (c'est-à-dire inférieure à 1 bar, de préférence entre 0,05 et 0,2 bar). Le gaz est par exemple amené au diffuseur au moyen d'un simple ventilateur. La pression de l'eau est très légèrement supérieure à celle du gaz (par exemple P_{gaz} = 0,10 bar Pₑₐᵤ = 0,12 bar).

La section de la chambre du diffuseur est avantageusement cylindrique, mais peut avoir toute forme s'adaptant à la canalisation d'amenée du gaz : la section peut être par exemple carrée, hexagonale, pentagonale, ovale, etc...

De manière préférée, en particulier pour l'application décrite dans cette demande, les orifices sont millimétriques, c'est-à-dire que leur diamètre est compris approximativement entre 1 et 7 millimètres, de préférence de 2 à 5 millimètres.

Ces orifices peuvent être disposés en une ou plusieurs lignes longitudinales le long du tube et par exemple selon une disposition en quinconce.

De manière avantageuse, la paroi du tube forme, localement au niveau des orifices, un creux en direction de l'axe du tube, de manière à rapprocher chaque orifice de l'axe central du tube. Ainsi, chaque goutte de liquide qui perle au niveau des orifices, se trouve au coeur du flux gazeux, et est immédiatement pulvérisée et transportée par le courant gazeux.

De préférence, le rapport massique du flux gazeux au flux liquide circulant dans ledit diffuseur est compris entre 1/2 et 1/10 environ.

Un diffuseur selon l'invention peut être utilisé avec tout gaz, par exemple de l'air, de l'oxygène, de l'azote, ... et tout type de liquide, plus ou moins visqueux ou épais, renfermant éventuellement des micro-organismes et provenant par exemple d'une station d'épuration, ou bien contenant un réactif chimique dissous ou en suspension.

Le diffuseur selon l'invention peut fonctionner dans toutes les directions (en position horizontale, verticale ou oblique).

Le gaz et le liquide peuvent avoir des températures différentes pour favoriser un échange thermique.

Le couple gaz/liquide préféré et décrit ci-après est le couple air/eau.

La présente invention concerne aussi un dispositif de traitement d'un flux gazeux par un liquide, comprenant le diffuseur pneumatique selon l'invention. Ledit diffuseur reçoit d'une part au moins une fraction du flux gazeux à traiter et d'autre part le liquide et diffuse le liquide sous forme de gouttelettes en suspension dans le flux gazeux dans une colonne de contact entre le gaz et les gouttelettes, sans garnissage, avec un dévésiculeur en tête de colonne, ladite colonne étant pourvue, au voisinage de son extrémité supérieure, d'une canalisation de sortie du flux gazeux traité et au voisinage de son extrémité inférieure d'une canalisation d'évacuation du liquide.

De manière avantageuse le flux gazeux est de l'air contenant des composés biodégradables par des micro-organismes en suspension dans le liquide.

En amont du diffuseur, il est donc avantageux d'effectuer une pré-filtration du liquide par exemple de l'ordre du millimètre.

La colonne ne nécessite pas de garnissage, et peut traiter ainsi plusieurs milliers de mètres-cubes de gaz par heure.

Un tel dispositif peut traiter par exemple les gaz odorants provenants d'industries agro-alimentaires, des abattoirs, des équarrissages, des stations d'épuration, des postes de relevage des eaux usées. Le liquide "traitant" peut provenir par exemple d'un bassin de boues activées d'une station d'épuration. On traite ici un air pollué par de "l'eau sale".

Le liquide récupéré en bas de colonne de traitement peut être recyclé.

La présente invention sera mieux comprise à l'aide des figures suivantes, illustrant un exemple de réalisation.

La figure 1 est un schéma illustrant un exemple de dispositif de traitement biologique d'un gaz incorporant le diffuseur selon l'invention.

La figure 2 est une vue en coupe longitudinale du diffuseur selon l'invention.

La figure 3 est une vue en coupe transversale du diffuseur.

La figure 4 présente un détail d'un tube du diffuseur selon une coupe suivant AA du diffuseur de la figure 3.

La figure 5 est une coupe suivant BB du tube représenté à la figure 4.

Un gaz G (par exemple de l'air), renfermant des molécules malodorantes et polluantes (H₂S, C.O.V., etc...) est divisé en deux fractions G₁ (par exemple 75 %) et G₂ (par exemple 25 %).

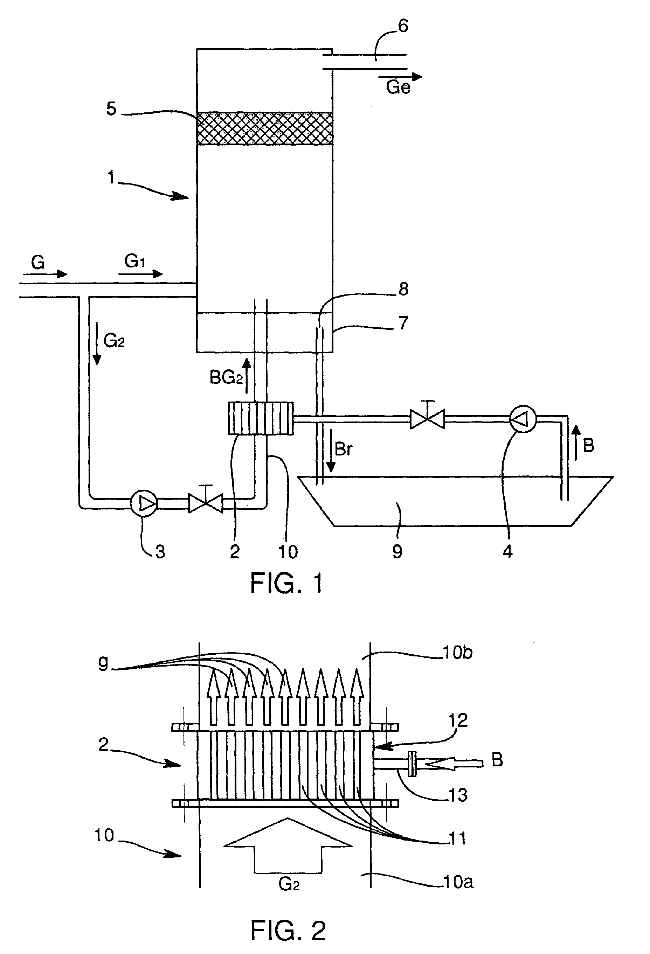

La fraction G₁ pénètre directement dans la zone inférieure de la colonne (1) de traitement représentée sur la figure 1. La fraction de gaz G₂ est dirigée vers le diffuseur (2), par un ventilateur (3), où il est mélangé à un liquide B, issu par exemple d'un bassin de boues activées (9) via une pompe (4).

Le mélange BG₂ du gaz et du liquide, à la sortie du diffuseur (2) est sous la forme d'une suspension du liquide B dans le gaz G₂. Ce mélange BG₂ parvient à l'intérieur de la colonne (1), dans la zone inférieure de celle-ci où il se dilue avec la fraction gazeuse G₁. Le contact gaz/liquide est prolongé pendant que le mélange BG₁G₂ traverse la colonne de bas en haut. Il rencontre en tête de colonne un dévésiculeur (5) qui fait retomber le liquide B vers le bas de la colonne et laisse s'échapper le gaz épuré Ge vers la sortie supérieure (6). Quant au liquide B en pied de colonne (7), il est retourné, via une canalisation de trop-plein (8) vers le bassin de boues activées, sous la forme d'un liquide Br chargé des polluants absorbés au contact du gaz G₂, polluants qui vont être dégradés par les micro-organismes contenus dans B, Br et le bassin des boues activées. Le liquide B n'est en fait pas utilisé brut, mais est filtré en amont du diffuseur, sur un filtre dont le seuil de passage est de l'ordre du millimètre. Ce filtre peut être par exemple une simple crépine.

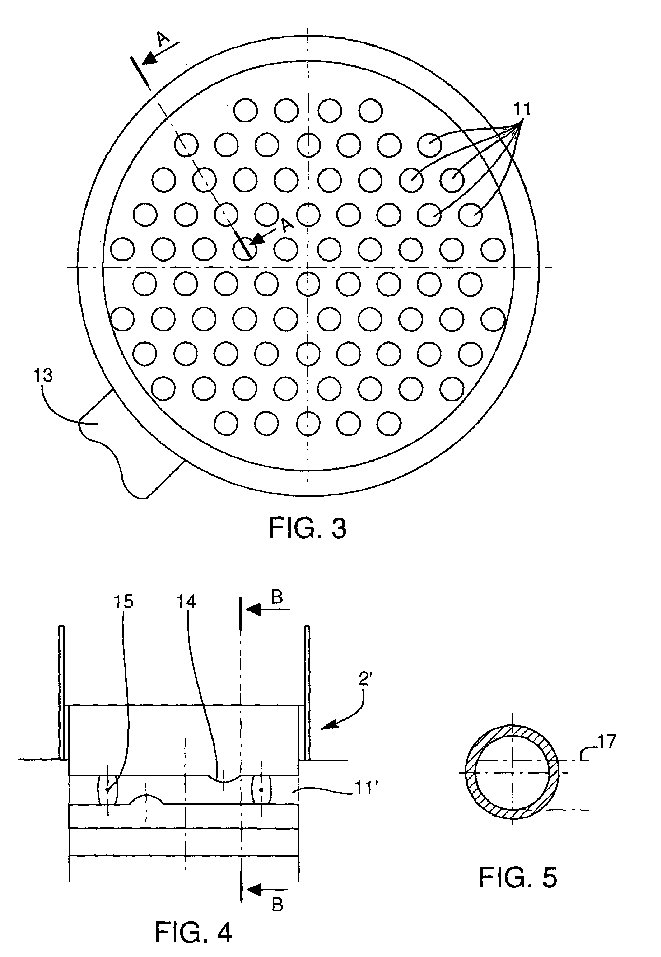

La structure du diffuseur (2) est schématisée sur les figures 2 et 3.

Le diffuseur (2) est constitué d'un faisceau (jusqu'à 300 tubes par exemple) de tubes (11) allongés, parallèles entre eux, espacés les uns des autres, et disposés dans une chambre cylindrique (12) s'intercalant entre les deux sections (10a et 10b) de la canalisation (10) amenée du gaz G₂. Les tubes (11) sont parallèles à l'axe de la canalisation (10) et servent à diviser le courant gazeux G₂ en une pluralité de courants (g). Cette réduction de section (entre 10a et 11) provoque une augmentation de la vitesse du gaz au passage dans les tubes (11).

Chacun de ces tubes (11) est perforé, de manière régulière ou non d'un ou de plusieurs orifices présentant par exemple un diamètre de 2 à 7 mm. La chambre (12) est entièrement fermée, sauf dans une de ses parois latérales, pour recevoir le liquide B arrivant par la canalisation (13). Le liquide B vient donc occuper tout l'espace autour des tubes (11), puis perler en gouttes successives au niveau de chaque orifice (non représentés sur la figure 2). Les courants gazeux (g), circulant à grande vitesse (de l'ordre de 150 à 300 km/h par exemple) dans les tubes (11) font éclater en les pulvérisant, chacune de ces gouttes, dès leur formation. Il en résulte de très fines gouttelettes (de l'ordre de 100 µm, ou même moins) qui sont mises en suspension dans le flux de gaz G₂ qui pénètre dans la colonne (1), où apparaît alors un brouillard. Lors d'essais, des gouttelettes de 16 µm ont été mesurées.

Dans une variante avantageuse du diffuseur, désignée par (2') et représenté sur la figure 4, chaque tube (11') (ou quelques-uns seulement) est aplati à certains endroits (14) formant au niveau des orifices (15), des creux en direction de l'axe du tube (11'), de manière à rapprocher chaque orifice (15) de l'axe central dudit tube. La figure 5 situe la nouvelle position de l'orifice (15) sur la ligne (17) rétrécissant le tube et augmentant encore la vitesse du gaz G₂ dans cette zone. La goutte de liquide qui vient perler au niveau de l'orifice (15) se trouve alors presque au centre du tube (11') et est emportée et pulvérisée encore plus vite par le courant gazeux. De manière préférée, chaque orifice (15) peut être décalé radialement de 90° par rapport à ses voisins, comme représenté sur la figure 5.

Le dispositif de traitement biologique de gaz décrit ci-dessus, en tant que mode de réalisation préféré de l'invention, permet, grâce à un seul diffuseur tel que revendiqué, de traiter de l'ordre de 10.000 m³ de gaz pollué par heure grâce à seulement quelques m³ d'effluent de boues activées. Un dispositif utilisant des buses classiques nécessiterait une centaine de buses.

Le diffuseur selon l'invention n'est pas limité aux exemples présentés ci-avant. Il peut être utilisé dans toute application où de fines gouttelettes d'un liquide, plus ou moins épais, doivent être dispersées dans un milieu gazeux.

Un tel diffuseur, en augmentant la surface d'échange gaz/liquide, peut contribuer à favoriser les échanges chimiques, biologiques et thermiques dans tout réacteur utilisant un gaz et un liquide. On peut citer par exemple, de manière non limitative :
- le lavage chimique de gaz (absorption de constituants gazeux dans un liquide) ;
- l'oxygénation d'un liquide, ou plus généralement l'introduction d'un gaz dans un liquide plus ou moins visqueux ;
- l'échange thermique (refroidissement ou chauffage d'un liquide) selon la température du gaz par rapport à celle du liquide. La variante chauffage peut être utilisée par exemple pour la déshydratation de boues.

## Revendications

1. Diffuseur pneumatique (2) pour la formation de fines goulettes d'un liquide par collision avec un flux gazeux, **caractérisé en ce qu'**il comprend une chambre (12) fermée raccordée à un conduit d'arrivée (13) de liquide, dans le volume intérieur de laquelle est disposé un faisceau de tubes (11), parallèles à l'axe de ladite chambre et percés radialement d'orifices (15) permettant au liquide contenu dans ladite chambre (12) de s'échapper en gouttelettes qui sont alors pulvérisées par le gaz (G₂) amené au diffuseur au moyen d'un ventilateur et circulant à grande vitesse à l'intérieur desdits tubes (11).

2. Diffuseur (2) selon la revendication 1, **caractérisé en ce que** le diamètre des orifices (15) est compris approximativement entre 1 et 5 millimètres.

3. Diffuseur (2) selon la revendication 1 ou 2, **caractérisé en ce que** les orifices (15) sont disposés en une ou plusieurs lignes longitudinales le long du tube (11).

4. Diffuseur (2) selon l'une quelconque des revendications précédentes, **caractérisé en ce que** la paroi du tube (11) forme, localement au niveau des orifices (15), un creux en direction de l'axe du tube, de manière à rapprocher chaque orifice de l'axe central du tube.

5. Diffuseur (2) selon l'une quelconque des revendications précédentes, **caractérisé en ce que** le rapport massique du flux gazeux au flux liquide circulant dans ledit diffuseur (2) est compris entre 1/2 et 1/10 environ.

6. Diffuseur (2) selon l'une quelconque des revendications précédentes, **caractérisé en ce que** le gaz est de l'air.

7. Diffuseur (2) selon l'une quelconque des revendications précédentes, **caractérisé en ce que** le liquide est aqueux.

8. Diffuseur (2) selon l'une quelconque des revendications précédentes, **caractérisé en ce que** le liquide contient des micro-organismes en suspension.

9. Diffuseur (2) selon l'une quelconque des revendications précédentes, **caractérisé en ce que** le liquide contient un réactif chimique dissous ou en suspension.

10. Diffuseur (2) selon l'une quelconque des revendications précédentes, **caractérisé en ce que** le gaz et le liquide ont des températures différentes pour favoriser un échange thermique.

11. Dispositif de traitement d'un flux gazeux par un liquide, comprenant un diffuseur pneumatique (2) selon l'une quelconque des revendications précédentes, recevant d'une part au moins une fraction (G₂) du flux gazeux à traiter et d'autre part le liquide (B) et diffusant le liquide sous forme de gouttelettes en suspension dans le flux gazeux dans une colonne (1) de contact entre le gaz et les gouttelettes, sans garnissage, avec un dévésiculeur (5) en tête de colonne, ladite colonne (1) étant pourvue, au voisinage de son extrémité supérieure, d'une canalisation (6) de sortie du flux gazeux traité et au voisinage de son extrémité inférieure d'une canalisation d'évacuation (8) du liquide.

12. Dispositif selon la revendication 11 **caractérisé en ce que** le flux gazeux est de l'air contenant des composés biodégradables par des micro-organismes en suspension dans le liquide.
